# DEMANDE DE BREVET EUROPEEN

(11) **EP 2 130 673 A1**
(43) Date de publication de la demande: **09.12.2009**
(21) Numéro de dépôt: 08104244.2
(22) Date de dépôt: 04.06.2008
(51) Int. Cl.: B32B 17/10, C09K 21/02, C01B 33/32

(54) **Vitrage anti-feu**

(71) Demandeur: AGC Flat Glass Europe SA, 1170 Bruxelles (Watermael-Boitsfort) (BE)
(72) Inventeur: Dury, Bertrand AGC Flat Glass Europe SA, 6040, Jumet (BE); Lescot, Thomas AGC Flat Glass Europe SA, 6040, Jumet (BE); Vos, Philippe AGC Flat Glass Europe SA, 6040, Jumet (BE)
(74) Mandataire: Le Vaguerèse, Sylvain Jacques

(57) **Abrégé**

L'invention un vitrage anti-feu transparent comprenant au moins une couche de matériau intumescent de silicate alcalin hydraté compris entre des feuilles de verre, dans la préparation duquel le matériau intumescent initialement fluide est soumis à un durcissement accéléré par exposition à un rayonnement UV.

## Description

La présente invention concerne les vitrages anti-feu comprenant au moins une couche d'un silicate alcalin hydraté dont l'exposition au feu engendre la formation d'une mousse opaque qui s'oppose à la transmission des radiations et maintient les feuilles de verre auxquelles la ou les couches de silicate alcalin sont associées.

L'utilisation des silicates alcalins hydratés dans la fabrication des vitrages anti-feu s'effectue selon deux modes distincts.

Le premier mode comprend les produits dans lesquels la, ou les couches de silicates sont formées à partir de solutions commerciales de ces silicates, solutions auxquelles sont ajoutés des additifs divers qui en améliorent les propriétés et/ou les conditions de mise en oeuvre. Partant de ces solutions les couches sont obtenues en répandant la solution sur un support et en procédant à un séchage plus ou moins prolongé jusqu'à obtention d'une couche solide. La couche de silicate ainsi formée, éventuellement directement sur une feuille de verre, est ensuite incluse dans un ensemble feuilleté entre deux feuilles de verre.

Pour cette première famille de produits les conditions de préparation, et particulièrement celles de séchage sont relativement contraignantes.

Le choix de la voie du séchage à partir de silicates alcalins industriels a également des conséquences pour ce qui concerne les qualités mécaniques des vitrages incorporant ces couches de silicates. La faible teneur en eau choisie pour éviter l'altération dans le temps des propriétés de transparence, ne permet pas d'avoir des couches très "plastiques". La conséquence est une limitation de la résistance dite "au choc mou", résistance qui est nécessaire dans certaines applications notamment dans les vitrages extérieurs, et qui doit être compensée par une structure particulière, par exemple par association avec des feuilles stratifiées comportant un intercalaire d'un matériau thermoplastique, ou encore le plus souvent par l'adjonction de composés qui accroissent la plasticité de la couche intumescente. Pour produits plastifiants on utilise le plus souvent des polyols, notamment des glycols. La présence de ces derniers est relativement importante pour les teneurs en eau les plus faibles. Ainsi pour des teneurs en eau de l'ordre de 20 à 25% en poids il est usuel d'introduire de l'ordre de 15% en poids ou plus d'éthylène glycol ou de glycérine. La présence de quantités telles de produits organiques n'est pas avantageuse pour ce qui concerne le comportement au feu. Ils conduisent à la carbonisation et au dégagement de fumées indésirables.

Le second mode traditionnel concerne les produits dans lesquels une solution de silicate à teneur en eau relativement élevée, est figée par l'addition de produits qualifiés de "durcisseurs", "d'agents de réticulation" ou d'autre façon encore. Ces qualificatifs désignent de façon générique des produits qui favorisent la gélification de la solution de silicate. Ils sont choisis soigneusement, de sorte qu'après leur addition à la solution de silicate, cette dernière laissée au repos durcit spontanément dans un temps relativement bref, sans qu'il soit nécessaire de procéder à un séchage.

Pour ces produits, avant formation du gel, la solution avec ses additifs est coulée entre deux feuilles de verre délimitant un espace clos. Un joint situé à la périphérie des feuilles de verre les associe de façon étanche et maintient la solution pendant sa gélification.

L'absence de séchage constitue un avantage certain pour ce qui concerne le mode de production. Les produits en question conservent bien évidemment une teneur en eau relativement élevée. Cette teneur est choisie de telle sorte que la solution de silicate ne puisse pas donner lieu à une gélification prématurée rendant impossible sa mise en oeuvre ultérieure. La stabilité dans le temps de ces solutions est en effet fonction de cette teneur en eau.

De façon typique les compositions antérieures mises en oeuvre sans séchage, ont une teneur en eau de l'ordre de 47-48% en poids. Les publications à ce sujet ne proposent pas de composition présentant une teneur en eau inférieure à 44%, pour la raison qu'une teneur en eau moindre conduisait à une composition dont la fluidité ne pouvait être garantie pendant un temps suffisant ("pot life").

Il convient de préciser que par teneur en eau on désigne celle qui peut être déterminée par évaporation complète. Cette teneur ne tient pas compte de la manière dont l'eau est éventuellement incluses dans ces compositions de silicates "hydratés".

La présence de cette eau relativement abondante peut conduire à un manque de cohésion du vitrage. Soumises à des efforts de cisaillement dans le plan du vitrage, les feuilles de verre, même à température ordinaire, sont susceptibles de jouer les unes par rapport aux autres.

La teneur en eau élevée peut aussi produire une "mousse" très irrégulière, nuisible à l'intégrité de la feuille soumise à l'épreuve du feu. Pour que ces produits présentent les qualités "mécaniques" requises à l'épreuve au feu il est fait usage de moyens qui compensent les propriétés insuffisantes de la couche intumescente. Par exemple, à la place de feuilles de verre recuit il est fait usage de verre trempé. Cette solution accroît le coût des produits mais surtout nécessite la production aux dimensions finales requises, le découpage ultérieur n'étant pas possible.

Par ailleurs de fortes proportions d'eau dans la couche intumescente nécessitent de renforcer la protection des bords pour éviter une altération dans le temps, consécutive par exemple à un assèchement progressif à partir de ces bords.

Un but de l'invention est de proposer la formation de vitrages anti-feu comprenant des couches intumescentes qui puissent être formées sans séchage, et sans pour autant que ces couches conservent une teneur en eau telle qu'elle conduise aux insuffisances, notamment relatives à la tenue au feu, indiquées ci-dessus.

Un but de l'invention est de proposer la formation de vitrages dont la ou les couches intumescentes offrent un caractère réfractaire relativement élevé.

Un autre but de l'invention est notamment de proposer la formation de tels vitrages dans les couches intumescentes desquelles la teneur en eau reste suffisante pour garantir une plasticité adéquate.

Un autre but de l'invention est de faire en sorte que la teneur en eau n'entraîne pas de détérioration des propriétés optiques, en particulier ne conduise pas à la présence d'un "haze".

Il est possible d'obtenir des compositions fluides de silicates alcalins qui durcissent sans séchage, et dont la teneur en eau peut être sensiblement moindre que celles des compositions analogues de l'art antérieur. La demande européenne non publiée n° 07 108 971.8 déposée le 25 mai 2007. La préparation de ces compositions comprend systématiquement comme matières fournissant de la silice, au moins pour partie, des suspensions de particules de silice colloïdale. Cette demande montre aussi que les propriétés de ces compositions de silicates, notamment leurs propriétés rhéologiques, dépendent pour une part des dimensions des particules de silice utilisées.

A propos de ces compositions qui durcissent sans qu'il soit nécessaire de procéder à un séchage, des objectifs contradictoires sont apparus.

Pour les qualités finales des produits le choix des compositions est en faveur de rapports molaires SiO₂/M₂O relativement élevés et à faible teneur en eau. La difficulté est de faire en sorte que dans les limites choisies la formation du gel puisse être bien maîtrisée dans le temps. Le risque en favorisant les compositions comme indiqué ci-dessus, est que la formation du gel soit trop rapide et que l'on ne puisse pas disposer de suffisamment de temps entre la réunion des différents constituants et le durcissement, pour effectuer convenablement l'application sur les feuilles de verre ou, plus encore, entre les feuilles de verre.

Des choix appropriés de compositions permettent de garantir le maintien d'un temps de conservation suffisant. Dans cet ordre d'idée, à des compositions identiques, la demande dont la référence est indiquée plus haut, enseigne que le temps de conservation ("pot life") dépend dans certaines limites de la taille des particules de silice. Plus les particules sont grosses, plus le temps de conservation peut être prolongé. Il est certainement avantageux de pouvoir disposer pendant plusieurs heures, ou même plusieurs jours avant leur utilisation, de compositions préparées par lots. La difficulté réside dans le fait d'être tributaire de l'évolution naturelle de ces compositions. Une fois appliquées, il est souhaitable que l'évolution vers des couches durcies se fasse aussi rapidement que possible pour minimiser le temps de production.

Dans la maîtrise du temps de prise en masse la demande citée ci-dessus propose le cas échéant d'accélérer le processus en chauffant de manière contrôlée la composition après son application. L'accélération est effective. Pour atteindre des vitesses de traitement encore plus favorable à la pratique industrielle il est souhaitable de disposer d'autres moyens.

Les inventeurs ont montré que l'accélération de formation d'un silicate durci pouvait être obtenue en exposant la composition à un rayonnement ultraviolet. L'accélération obtenue peut conduire à des vitesses de prise en masse aussi faibles que quelques minutes là ou en l'absence de cette exposition plusieurs heures ou même plusieurs jours pourraient être nécessaires.

Les inventeurs ont montré par ailleurs que l'exposition aux UV est avantageusement combinée avec un accroissement de température pour atteindre une meilleure efficacité.

Le temps d'exposition est fonction bien entendu de la quantité de composition traitée et de la puissance de rayonnement.

Les compositions sont exposées après qu'elles aient été appliquées soit sur une feuille de verre soit entre deux feuilles, suivant les modalités décrites dans la demande citée ci-dessus, modalités qui sont également reprises dans la suite de la description. Le but du traitement étant de parvenir à un état suffisamment solidifié, il n'est pas possible par la suite de modifier la géométrie de la couche constituée. En particulier son épaisseur est pratiquement figée.

En principe le plus souvent la prise en masse conduit également à l'adhérence de la couche à au moins une feuille de verre. Dans le cas ou la composition est introduite entre deux feuilles de verre l'adhérence se fait avec ces deux feuilles.

Dans un mode particulier, la prise en masse est réalisée sur un support temporaire. Une fois la couche suffisamment solidifiée, elle est retirée de son support pour être utilisée ultérieurement. Dans ce cas la production de la feuille est avantageusement réalisée en continu sur un convoyeur qui conduit en continu la couche déposée dans la zone d'exposition aux UV.

Les compositions de silicates utilisées sont sensibles aux UV qu'elles absorbent même lorsqu'elles sont sous une épaisseur limitée. A titre indicatif une épaisseur de 6mm de composition absorbe environ 90% du rayonnement auquel cette composition est exposée. Pour que la prise en masse s'effectue de manière aussi uniforme que possible dans l'épaisseur de la couche il faut faire en sorte que cette épaisseur ne soit pas trop importante. Au-delà l'absorption du rayonnement est telle qu'en profondeur son action est trop limitée.

Pour minimiser l'effet d'absorption qui se traduit par un traitement d'autant plus limité que la profondeur dans la couche s'accroît, il peut être avantageux, et ce d'autant plus que la couche est plus épaisse de procéder à une exposition sur les deux faces de la couche. Cette façon de procéder est relativement aisée dans la mesure où la couche se trouve normalement soit étalée sur une feuille de verre, soit introduite entre deux feuilles de verre. Les feuilles de verre ordinaire n'absorbent qu'une faible proportion des UV et ce d'autant moins qu'elles sont elles mêmes d'épaisseur limitée.

Plus la puissance du rayonnement est élevée plus court est le temps d'exposition. La limite supérieure à ne pas dépasser est celle pour laquelle un risque se manifesterait qui entraînerait localement la formation de défauts. La puissance du rayonnement d'UV seul auquel le silicate est exposé, est avantageusement comprise entre 50 et 15000w/m². De préférence cette puissance, compte tenu des conditions pratiques de mise en oeuvre, est de 200 à 8000w /m².

Dans la pratique, les lampes délivrant un rayonnement UV ne sont pas limitées à ces longueurs d'ondes. Elles couvrent généralement un spectre beaucoup plus large englobant à la fois du rayonnement visible et des infrarouges. La part de la puissance correspondant aux UV, pour les lampes les plus usuelles, représente de l'ordre du tiers de la puissance totale.

L'exposition aux UV est effectuée de préférence en élevant simultanément la température de la composition pour accroître la vitesse de durcissement. Compte tenu du fait que les lampes UV rayonnent aussi dans le reste du spectre, l'exposition permet de produire simultanément l'irradiation UV et le chauffage nécessaire. L'élévation de température peut aussi être obtenue par convection par circulation de l'atmosphère dans laquelle on opère.

La température dans la composition traitée est maintenue inférieure à celle pour laquelle l'eau contenue pourrait se vaporiser en entraînant la formation de bulles. Avantageusement la température est supérieure à 30°C, et de préférence supérieure à 50°C. Elle doit rester inférieure à 100°C, et de préférence est comprise entre 60 et 95°C.

La durée d'exposition aux UV est déterminée par la formation du gel suffisamment rigide. Cette durée en dehors des conditions indiquées ci-dessus est encore fonction des compositions de départ. On s'efforce dans la mesure du possible de rassembler les conditions qui permettent de réduire le temps de solidification à moins de 10 minutes, et de préférence à moins de 5 minutes, à partir du début d'exposition aux UV.

Pour favoriser l'action des UV, il est encore possible d'introduire dans la composition des produits photos-activateurs. Dans l'ensemble cependant, les compositions à base de silicates alcalins absorbant bien les UV, la présence de ces composés est d'un effet relativement limité. Des composés activateurs sont par exemple tels que : le triméthoxy(2-5-7-oxabicyclo(4.1.0)hept-3-4L)-éthylsilane, le tri-(propylène-glycol)-diacrylate, le vinyltriéthoxylane.

Le durcissement de la composition de silicate alcalin doit conduire à un produit qui peut supporter sans altération les étapes ultérieures de production. Pour les produits qui sont appliqués sur une feuille de verre, une fois durcis comme il vient d'être indiqué, la production se poursuit par l'application de la seconde feuille de verre et le calandrage de l'ensemble feuilleté. La composition doit être suffisamment rigide pour résister à la pression exercée au cours du calandrage sans réduction significative de son épaisseur. La pression exercée lors du calandrage est au moins de 5kg/cm², et de préférence au moins égale à 10kg/cm².

Les conditions qui permettent d'atteindre les durcissements souhaités sont encore fonction de la composition elle-même. Selon la teneur en eau et le rapport molaire SiO₂/M₂O, la propension à durcir spontanément est aussi sensiblement différente. Il va de soi que plus le durcissement spontané est présent, plus facile est encore l'obtention du durcissement dans les conditions de l'invention. Il convient donc de préciser comme dans la demande antérieure citée plus haut, les caractéristiques des compositions et de leur préparation.

Le mode traditionnel de préparation des couches intumescentes, avec ou sans séchage, comporte l'utilisation de solutions de silicates alcalins industriels comme composé de base. Ces solutions présentent des caractéristiques qui en limitent les possibilités d'utilisation. En particulier elles présentent des teneurs en eau relativement élevées, et ces teneurs sont d'autant plus importantes que le rapport molaire SiO₂/M₂O est lui-même plus important.

A titre indicatif la teneur en eau des solutions commerciales de silicates alcalins est de l'ordre de 65% en poids pour un rapport molaire de 3,3, et de l'ordre de 45% pour un rapport molaire de 2. Ces solutions industrielles sont ajustées pour maintenir une viscosité adéquate pour leurs utilisateurs. Aux valeurs indiquées ci-dessus, la viscosité se situe à environ 100mPa.s.

Pour les vitrages anti-feu, des rapports molaires plus importants sont préférables pour améliorer le caractère réfractaire. Il apparaît donc que les silicates alcalins du commerce ne sont pas utilisables, ou pas utilisables tels quels pour la préparation des compositions intumescentes, notamment lorsqu'il s'agit de produit dont on veut éviter le séchage, les teneurs en eau étant beaucoup trop élevées.

En pratique selon l'invention les couches intumescentes produites et utilisées dans les vitrages anti-feu, présentent avantageusement un rapport molaire SiO₂/M₂O compris entre 3 et 8, et de préférence entre 3,5 et 6, et de façon particulièrement préférée entre 3,5 et 5, et leur teneur en eau s'établit entre 30 et 48% et de préférence entre 35 et 43%.

Selon le mode d'application conduisant aux vitrages, à savoir soit par coulée entre deux feuilles constituant une sorte de récipient de la composition liquide, le durcissement s'effectuant entre les feuilles, soit en appliquant la solution sur une feuille horizontale, une seconde feuille de verre étant appliquée ultérieurement sur la couche intumescente lorsque le durcissement est commencé ou même achevé, la teneur en eau peut être plus ou moins importante.

La mise en oeuvre entre deux feuilles requiert de préférence une teneur en eau un peu plus élevée pour maintenir une faible viscosité qui facilite l'élimination éventuelle de bulles. De façon particulièrement préférée dans ce cas la teneur en eau est de 40 à 43% en poids. Dans le cas où la solution est étalée sur la feuille en position horizontale, la viscosité de la composition peut être un peu plus importante et en conséquence la teneur en eau est avantageusement moindre, et se situe de façon particulièrement préférée de 35 à 41%.

Dans tous les cas, les solutions commerciales de silicates alcalins ne peuvent être utilisées telles quelles. Compte tenu des différences importantes existant entre ces compositions et celles qui sont mises en oeuvre pour la formation des couches selon l'invention, il peut être préférable de procéder à la préparation de ces dernières sans utiliser, même pour partie, les solutions industrielles.

Pour préparer les compositions utilisées il est avantageux de partir de suspensions de silice colloïdale et d'hydroxyde alcalin. Ce dernier est soit sous forme de solution, soit au moins en partie sous forme de pastilles solides pour limiter le plus possible la teneur en eau du mélange. Les concentrations des solutions d'hydroxyde peuvent être relativement élevées. La teneur pondérale en oxydes métalliques peut atteindre 50% dans les solutions. Elle peut être de 85% dans les pastilles. Si les suspensions de silice ne dépassent pas ordinairement 50% en poids de silice, les compositions obtenues par réaction de ces suspensions avec l'hydroxyde alcalin peuvent présenter une teneur en eau sensiblement moindre que celle des silicates industriels et ceci avec des rapports molaires SiO₂/M₂O bien plus élevés. Par ailleurs la reproductibilité des compositions, et la régularité des propriétés des produits obtenus sont d'autant mieux assurées par ce mode de préparation.

Si néanmoins pour des raisons d'économie, des silicates industriels sont en partie utilisés, il reste nécessaire de les modifier par un apport substantiel de silice colloïdale pour parvenir aux compositions présentant les rapports molaires recherchés sans avoir à éliminer une quantité d'eau excessive.

Dans tous les cas la préparation des compositions des silicates alcalins utilisée dans la formation des couches intumescentes sans séchage passe par l'utilisation de suspensions de silice colloïdale. Selon l'invention la proportion de silice provenant de ces suspensions de silice colloïdale dans le matériau intumescent est avantageusement d'au moins 50%, de préférence d'au moins 60%, et de façon particulièrement préférée d'au moins 70%. La silice présente peut provenir en totalité de suspensions colloïdales.

Le durcissement des solutions de silicates alcalins dépend aussi de la dimension des particules de silice utilisées. Lorsque les produits sont durcis spontanément, la tendance est de choisir les dimensions qui permettent de maintenir la composition sous forme fluide suffisamment longtemps. Ceci est obtenu bien évidemment au détriment de la vitesse de durcissement au moment de l'utilisation de ces compositions fluides. Ceci correspond aux particules de silice les plus grosses.

Par voie de conséquence, les compositions dans lesquelles la dimension des particules de silice est accrue, peuvent présenter une teneur en eau réduite par rapport aux compositions de l'art antérieur, tout en conservant la fluidité requise pendant un temps suffisant pour l'utilisation dans les conditions habituelles.

Si les compositions antérieures utilisables ne permettaient pas de descendre en dessous d'une teneur en eau de 44%, et en pratique ne descendaient pas en dessous de 47-48%, l'utilisation selon l'invention de silice présentant des particules de dimensions telles qu'enseignées par l'invention, permet d'atteindre des teneurs en eau bien inférieures, pouvant aller jusqu'à 30% en poids, tout en conservant les propriétés rhéologiques nécessaires.

Il va de soi que l'accroissement des dimensions des particules est limité. Au-delà d'une certaine dimension les compositions ne présentent plus les propriétés optiques requises, et en particulier la transparence. Des dimensions trop importantes conduisent à une diffusion de la lumière, ou selon les termes usuels, à la formation d'un voile ("haze").

La mise en oeuvre des dispositions de l'invention permet de bénéficier des avantages liés à ces compositions comportant des particules suffisamment importantes pour que la formation du gel solide ne se fasse pas spontanément pendant des périodes relativement longues, sans pour autant, lorsque la composition est mise en place sur les feuilles de verre ou entre celles-ci, que le durcissement soit trop long.

En pratique les particules de silice utilisées pour la formation des compositions de silicates alcalins ont un diamètre moyen qui n'est pas inférieur à 40nm et de préférence pas inférieur à 50nm. Ces particules ont aussi des dimensions moyennes qui ne dépassent pas avantageusement 150nm et de préférence pas 130nm. Le diamètre moyen particulièrement préféré se situe entre 60 et 120nm.

Les dimensions des particules d'une même suspension de silice sont ordinairement bien homogènes. Une part qui n'est pas inférieure à 80% en poids des particules se situe dans l'intervalle de ±10% du diamètre moyen.

Les dimensions des particules de silice dans les suspensions utilisées, apparaissent bien définies à l'observation en optique électronique. La mesure de ces dimensions, en dehors de l'observation optique, peut encore être faite par examen électro-acoustique (en utilisant par exemple un appareil de type "Acoustosizer"), par spectroscopie de corrélation de photons (en utilisant par exemple un appareil de type "Coulter Delsa 440SX"), ou encore par centrifugation.

Selon le mode de préparation adopté, et selon la teneur en eau recherchée dans la composition finale, une fois le mélange des constituants réalisé, il peut être nécessaire de procéder à un ajustement de la teneur en eau. Pour cela, une déshydratation peut être mise en oeuvre. Dans tous les cas, il est bien entendu préférable de faire en sorte que le mélange des différents constituants aboutisse à une composition dont la teneur en eau soit celle de la composition de la couche intumescente finale, ou au moins soit aussi voisine que possible de celle-ci. Avantageusement, et pour limiter l'opération de déshydratation éventuelle, la teneur en eau dans la composition telle que préparée, n'est pas supérieure à 50% en poids.

Lorsque la déshydratation est nécessaire, elle est faite avantageusement en soumettant le produit à une évaporation sous pression partielle. La déshydratation dans ce cas présente l'avantage de conduire simultanément au dégazage du produit. On prévient ainsi le risque d'entraînement de bulles dans la couche préparée à partir de cette composition.

La déshydratation peut être faite à température ambiante. Une température légèrement plus haute peut accélérer l'élimination de l'eau. Toutefois ce réchauffement de la composition doit rester très limité pour éviter tout risque de prise en masse anticipée. En pratique la température ne dépasse pas 60°C.

Après ajustement de la teneur en eau, la composition peut être conservée pendant plusieurs heures ou même plusieurs jours à température ambiante avant son utilisation. Lorsque les conditions de préparation sont convenablement choisies la composition peut être conservée au moins 48h. Si le temps de conservation doit être prolongé bien au-delà, il est préférable pour éviter tout risque de prise en masse, de la réfrigérer, par exemple aux environs de 4°C. A ces températures le "pot life" peut être très largement accru.

La couche intumescente est principalement composée de silicates alcalins et d'eau. Les silicates sont ceux de potassium ou de sodium. Il est possible d'avoir un mélange de ces silicates, néanmoins un tel mélange n'est pas préféré pour la raison qu'il conduit à des couches dont la température de ramollissement est abaissée.

Les silicates de potassium sont préférés. Ils représentent avantageusement au moins 60% en poids de l'ensemble des silicates, et de préférence au moins 80%. De façon particulièrement préférée, la totalité des silicates utilisés, aux impuretés inévitables près, autrement dit plus de 95% en poids, est constituée de silicate de potassium.

En dehors des silicates et de l'eau, divers additifs peuvent être introduits dans la composition, notamment des polyols, et en particulier de l'éthylène glycol ou de la glycérine.

Dans les produits intumescents séchés de l'art antérieur, l'introduction de ces polyols est destinée notamment à compenser le manque de plasticité des produits dont la teneur en eau est très faible (de 20 à 25%). La teneur en polyols peut alors s'élever jusqu'à 18-20% en poids dans la couche formée. Dans les couches intumescentes préparées selon l'invention, lorsque des polyols sont présents, leur teneur reste beaucoup plus faible. Elle n'est avantageusement pas supérieure à 10% en poids de la composition, et de préférence pas supérieure à 8%.

Des teneurs préférées en glycols, notamment en éthylène-glycol ou glycérine, sont comprises entre 2 et 6% en poids de la couche finale.

Traditionnellement les compositions intumescentes comportent encore d'autres additifs en faibles proportions. Il s'agit de produits azotés (urée, amines...) ou encore d'agents tensio-actifs.

Avantageusement les compositions contiennent de l'hydroxyde de tetra-methyl ammonium (TMAH) à une teneur qui n'est pas supérieure à 2% en poids.

La solution préparée est suffisamment stable aux conditions de température ambiante ordinaires. Elle peut être stockée pendant plusieurs heures, voire plusieurs jours au besoin en la refroidissant, sans risque de formation d'un gel. Il est possible de mettre à profit cette stabilité pour éliminer les bulles qui peuvent être apparues dans le brassage du mélange. L'élimination peut intervenir en laissant simplement la solution au repos ou par toute technique connue telle que l'utilisation d'ultrasons ou le dégazage sous pression partielle par exemple.

Les compositions utilisées ne nécessitent aucun séchage. Cette particularité, en dehors du gain qu'elle apporte dans la conduite de la production des vitrages, permet aussi la constitution de couches intumescentes dont l'épaisseur n'est pas limitée. Précédemment cette épaisseur tenait compte de la longueur du temps de séchage. En pratique ce temps croissant comme le carré de l'épaisseur, pour rester dans des limites acceptables industriellement, l'épaisseur des couches séchées ne dépassait pas ordinairement 2mm. L'utilisation de couches durcissant sans séchage permet de produire des couches beaucoup plus épaisses. Néanmoins, comme indiqué précédemment, l'efficacité de l'exposition aux UV ne permet pas d'atteindre la composition sur des profondeurs très élevées. Pour une exposition d'un seul côté la profondeur est de préférence au plus de 6mm. La couche ne doit donc pas dépasser cette épaisseur. Au-delà, pour des épaisseurs plus importantes, l'exposition des deux faces est nécessaire pour conserver une efficacité suffisante et donc un durcissement dans des temps avantageux.

L'utilisation de couches épaisses peut conduire à des produits sensiblement différents de ceux habituellement disponibles. Par exemple les qualités de tenue au feu qui conduisent dans les techniques traditionnelles à accroître le nombre de couches et simultanément des feuilles de verre qui les supportent, peuvent être remplacées par des couches plus épaisses et un nombre de feuille de verre moindre. Autrement dit, il est possible par ce biais de réduire l'épaisseur, le poids et le coût du vitrage pour une même qualité finale.

La production des vitrages selon l'invention est représentée de façon schématique aux figures annexées dans lesquelles:
- la figure 1 est une vue schématique en perspective d'un vitrage anti-feu élémentaire selon l'invention ;
- la figure 2 est un diagramme d'un mode de production de la composition intumescente utilisée selon l'invention ;
- la figure 3 est un diagramme d'un autre mode de production de la composition intumescente utilisée selon l'invention ;
- la figure 4 est un diagramme illustrant un mode de production de vitrages selon l'invention ;
- la figure 5 est un diagramme d'un autre mode de production de vitrages selon l'invention.

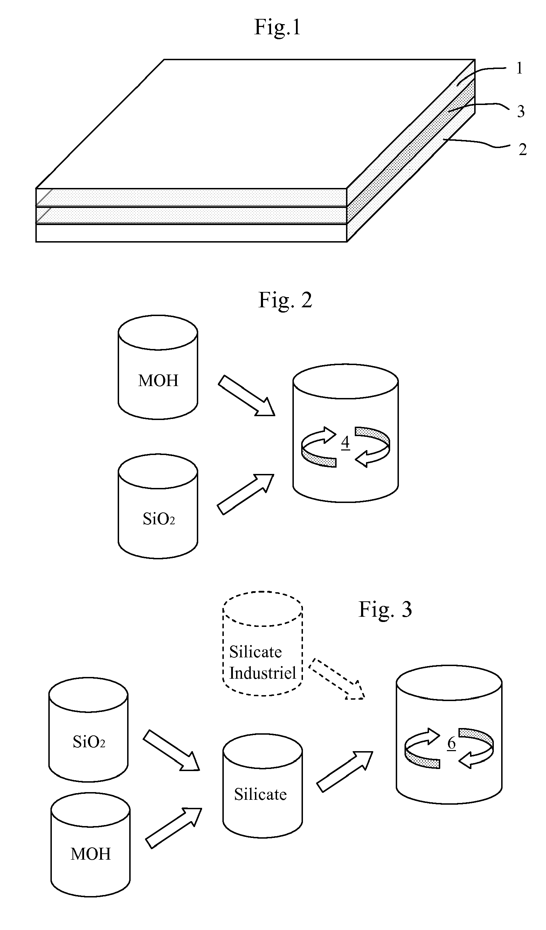

L'élément de base des vitrages anti-feu transparents représenté à la figure 1 est constitué systématiquement d'une couche intumescente 3, prise entre deux feuilles de verre 1 et 2. Les feuilles de verre sont comme représentées monolithiques ou le cas échéant constituées d'un ensemble feuilleté incluant une feuille intercalaire par exemple de type butyral de polyvinyl (PVB).

Sur la base de cet élément les vitrages anti-feu commercialisés sont développés notamment en associant dans un même ensemble plusieurs couches intumescentes et plusieurs feuilles de verre, identiques ou différentes selon l'usage envisagé. Dans la pratique, la multiplication des couches a pour but notamment d'accroître les caractéristiques de résistance au feu, les multiples couches intumescentes additionnant leurs effets. De tels assemblages sont avantageusement remplacés par d'autres dans lesquels les couches sont plus épaisses, le mode de formation sans séchage se prêtant bien pour les raisons indiquées plus haut à la formation de couches épaisses.

La figure 2 présente de façon schématique un mode de préparation de la composition intumescente. Selon le mode préféré la composition de silicate est formée à partir d'un mélange d'hydroxyde alcalin MOH et d'une suspension de particules de silice SiO₂. A ces constituants de base s'ajoutent le cas échéant les additifs notamment les glycols, les tensio-actifs etc.

Le mélange est effectué pour parvenir aux compositions adéquates selon l'invention à savoir une teneur en eau (compte non tenu des additifs organiques éventuels) aussi faible que possible et voisine de 50% ou moins, avec un rapport molaire relativement élevé comme indiqué précédemment. Le mélange est effectué sous agitation pour bien homogénéiser la composition comme représenté.

La composition 4 est dégazée pour éliminer les bulles éventuellement présentes après ce mélange. Elle est éventuellement soumise à une déshydratation pour ajuster la teneur en eau.

La composition intumescente est stable à la température ordinaire. Elle l'est encore davantage conservée à environ 4°C.

La figure 3 illustre la variante dans laquelle une part de la silice de la composition provient de solution de silicates industriels. Comme précédemment une part d'au moins 40% de la silice est constituée de silice colloïdale répondant aux caractéristiques énoncées. La composition obtenue 6 peut présenter une teneur en eau plus faible que dans le cas précédent en partant d'un silicate préparé de manière à être très concentré.

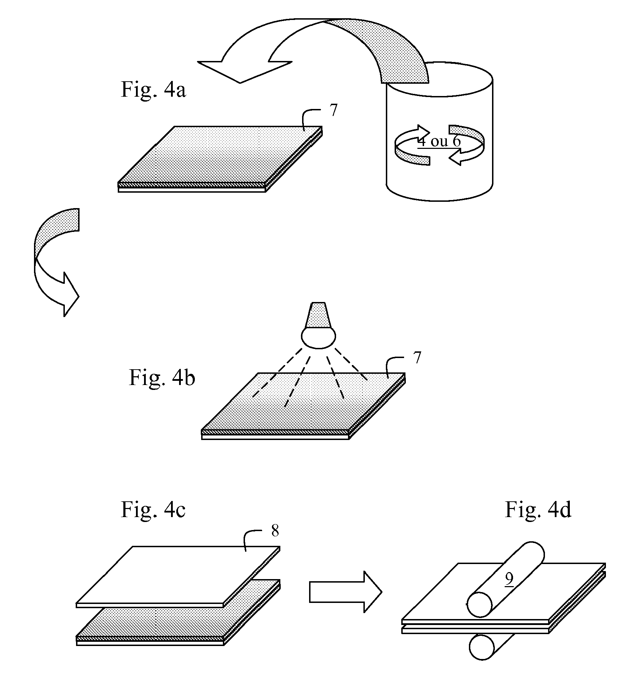

La figure 4 montre une manière d'utilisation des compositions intumescentes préparées.

A la figure 4a, la composition liquide est appliquée en une couche 7 sur une feuille de verre 5 horizontale. La composition est maintenue en place par un cordon étanche disposé à la périphérie.

Selon sa nature précise la composition est déjà suffisamment visqueuse de telle sorte qu'elle se répand avec une certaine lenteur. Cette particularité peut être mise à profit pour constituer le cordon étanche à la périphérie dans la composition elle-même. Le figeage accéléré de la composition sur le bord de la feuille est obtenu par exemple par un chauffage intense. Ce chauffage peut être appliqué sur la composition mais aussi sur la feuille de verre avant que celle-ci ne soit revêtue de la composition.

La couche de composition étalée convenablement est ensuite exposée au rayonnement UV comme indiqué à la figure 4b. Une deuxième feuille de verre 8 vient recouvrir la couche 7 pendant ou après l'exposition et le durcissement.

Dans le mode représenté l'exposition est faite alors que la feuille 8 n'est pas appliquée. Compte tenu de ce que la feuille de verre clair absorbe peu les UV sauf si elle est très épaisse, l'exposition nécessaire n'est pas sensiblement modifiée que l'on procède à l'exposition avant ou après mise en place de la feuille 8. L'ensemble exposé est éventuellement chauffé pour accroître encore la vitesse de durcissement.

Pour améliorer l'adhérence de la couche intumescente à la feuille de verre il est aussi possible d'appliquer sur celle-ci, ou encore d'introduire dans la composition, des composés favorisant cette adhérence. Il s'agit par exemple de silanes comportant éventuellement des groupes fonctionnels tels les amino-silanes.

L'opération de superposition des feuilles de verre et des couches intumescentes comprend éventuellement plusieurs couches intumescentes et autant de feuilles de verre supplémentaires. Ces couches intumescentes et feuilles de verre sont identiques ou différentes selon les applications envisagées.

L'assemblage final, effectué après durcissement, est conduit avantageusement par calandrage entre des rouleaux comme indiqué en 9 (figure 4d). On peut également procéder à un passage à l'autoclave. La température de l'autoclave est assortie à la pression mise en oeuvre. A titre indicatif sous 13 atmosphères relatives, la température ne dépasse pas 130°C.

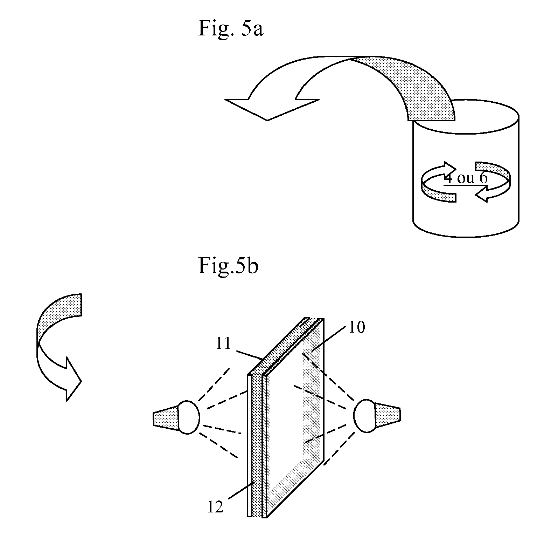

Dans la manière présentée à la figure 5b, la composition intumescente est versée dans l'espace délimité par deux feuilles de verre 10 et 11 réunies sur leurs bords par un cordon de matériau 12 qui rend cet espace étanche. Comme précédemment la composition durcit sans séchage, entre les feuilles de verre.

L"application de la composition peut aussi être effectuée sur un support continu, la couche étant alors récupérée sous forme d'un ruban. La solution de silicate préparée comme précédemment est versée sur le convoyeur horizontal lequel est avantageusement constitué d'un matériau polymère non adhérant à la feuille de silicate préparée. Le convoyeur ainsi revêtu passe sous les rampes UV avantageusement dans un four accélérant le durcissement. La feuille intumescente durcie est séparée du tapis convoyeur et éventuellement enroulée sur elle même. Pour éviter que les spires n'adhèrent les unes aux autres la feuille peut être "interfoliée avec une feuille intercalaire pendant le stockage. La feuille intumescente ainsi préparée peut être assemblée ultérieurement avec des feuilles de verre comme précédemment.

La figure 5 représente de manière schématique le mode de production d'un vitrage dans lequel la composition intumescente fluide est versée entre deux feuilles 10 et 11 formant avec un joint 12 disposé à leur périphérie, un récipient étanche. La composition est ensuite exposée comme précédemment au rayonnement UV. Dans la forme représentée à la figure 5b, l'irradiation UV est pratiquée sur les deux faces pour améliorer la régularité et la rapidité du traitement.

L'incidence de l'irradiation aux UV sur le durcissement des compositions est l'objet des essais suivants.

Les premiers essais sont réalisés à partir d'une composition de silicates préparée à partir des constituants suivants :
- 447g de silice colloïdale en suspension à 50% de silice de diamètre moyen 30nm (Ludox TM50);
- 173g de KOH ;
- 49g de glycérine
- 27g de TMAH.
La composition ainsi constituée présente un rapport molaire de 4,6 une teneur en eau de 49%, avec 7% de glycérine et 1% de TMAH. Cette composition est agitée pendant 2h avant utilisation. Elle est appliquée en couche de 4mm et exposée sous UV à une puissance de 1500w/m² (pour les seuls UV). L'exposition est faite sur une composition portée à 60°C. Le durcissement suffisant pour procéder à un assemblage comme décrit précédemment est atteint en moins de 10 minutes.

Une composition identique dans laquelle on ajoute 0,5% en poids d'activateur triméthoxy(2-5-7- oxabicyclo(4.1.0)hept-3-4L)éthylsilane est constituée. La mise en oeuvre dans les conditions précédentes conduit à un durcissement en 7 minutes. L'activateur permet encore d'accélérer le durcissement.

Une composition similaire est obtenue en substituant à la silice colloïdale précédente, une autre dont la dimension moyenne des particules est de 70nm (Klebosol). Les autres caractéristiques de composition sont identiques. Cette composition est agitée 24 heures avant son utilisation. Exposée dans les conditions précédentes elle ne durcit qu'après 13 minutes. Ceci montre bien la tendance selon laquelle les compositions comportant des particules de silice plus grosses durcissent plus lentement. La même composition sans l'exposition aux UV et sans chauffage peut être conservée sans durcir pendant plusieurs jours. La mise en oeuvre de l'invention permet donc une accélération sensible du durcissement.

Il faut encore remarquer que la même composition mais dont l'utilisation intervient après deux heures seulement de maturation ne durcit qu'après 1 heure d'exposition. La maturation de la solution permet un traitement plus rapide. C'est un facteur supplémentaire qui permet de contrôler les conditions de traitement.

Une autre composition est préparée comportant :
- 432g de suspension de silice colloïdale (Klebosol) ;
- 167,5g de KOH.
La composition à un rapport molaire de 4,6 et une teneur en eau de 52%. Elle est agitée pendant 20 heures avant utilisation. Après cette maturation elle reste toujours très fluide. La composition déposée en couche de 4mm est exposée comme précédemment aux UV en étant portée à 60°C. Le gel est formé et durci en 8 minutes.

La présence des additifs, et notamment de la glycérine, ou de l'éthylène glycol, qui tendent à "plastifier" la composition, ont aussi tendance à retarder son durcissement.

Une composition est préparée en combinant l'apport de silice sous forme colloïdale comme précédemment, et une solution aqueuse de silicate (à 50% en poids d'eau). La composition préparée comprend :
- 246,2g de solution de silicate
- 289g de suspension de silice colloïdale (Klébosol)
- 23,4g de glycérine
- 20,7g de TMAH.
La composition finale présente un rapport molaire de 4,6, une teneur de 4% en poids de glycérine, 1% en poids de TMAH et une teneur en eau de 44%. Le mélange est agité pendant 20 heures.

La composition est appliquée en une couche de 4mm d'épaisseur et soumise aux UV et à la chaleur dans les conditions précédentes. Elle durcit en environ 10 minutes.

Des compositions présentant des rapports molaires différents des précédents sont préparées pour montrer l'influence de ceux-ci sur les conditions de durcissement.

Une composition à faible rapport molaire est obtenue à partir de :
- 164,3g de silice colloïdale (Klébosol)
- 99,8g de KOH
- 20,9g de glycérine
- 10,6g de TMAH

La composition présente un rapport molaire de 3, une teneur en poids de glycérine de 7%, 1% de TMAH et 49,8% d'eau. Elle est laissée au repos pendant 20 heures. Cette composition appliquée sous 4mm d'épaisseur est exposée aux UV à chaud comme précédemment. Le gel est obtenu après 28 minutes d'exposition. L'abaissement du rapport molaire SiO₂/K₂O conduit à un durcissement plus lent.

A l'inverse on prépare une composition à rapport molaire accru à partir de :
- 201,3g de silice colloïdale (Klébosol)
- 59,9g de KOH
20,7g de glycérine
10,4g de TMAH

La composition présente un rapport molaire de 6, une teneur en poids de glycérine de 7%, 1% de TMAH et 48,7% d'eau. Elle est laissée au repos pendant 20 heures. Cette composition appliquée sous 4mm d'épaisseur est exposée aux UV à chaud comme précédemment. Le durcissement est obtenu après 10 minutes d'exposition. Les rapports molaires SiO₂/K₂O élevés montrent bien un durcissement plus rapide.

## Revendications

1. Vitrage anti-feu transparent comprenant au moins une couche de matériau intumescent de silicate alcalin hydraté compris entre des feuilles de verre, dans la préparation duquel le matériau intumescent initialement fluide est soumis à un durcissement accéléré par exposition à un rayonnement UV.

2. Vitrage anti-feu selon la revendication 1 dans lequel le matériau est porté à température comprise entre 30°C et 100°C et de préférence comprise entre 60 et 95°C.

3. Vitrage anti-feu selon la revendication 2 dans lequel l'exposition au rayonnement UV est au moins en partie simultanée à l'élévation de température.

4. Vitrage anti-feu selon l'une des revendications précédentes dans la composition duquel la teneur en eau du matériau intumescent est au plus de 50% et d'au moins 30% en poids du matériau considéré.

5. Vitrage anti-feu selon la revendication 4 dans lequel la teneur en eau est comprise entre 35 et 43% en poids.

6. Vitrage anti-feu selon la revendication 4 ou la revendication 5, dans lequel le matériau intumescent présente un rapport molaire de silice aux alcalins compris entre 3 et 8, et de préférence entre 3,5 et 6.

7. Vitrage anti-feu selon l'une des revendications précédentes dans lequel le matériau intumescent à base de silicate alcalin hydraté est formé au moins partiellement à partir de suspension de silice colloïdale, la proportion de cette silice, par rapport à l'ensemble de la silice présente dans la couche intumescente, est d'au moins 50% en poids et de préférence d'au moins 60% en poids.

8. Vitrage anti-feu selon la revendication 7 dans lequel les particules de silice de la silice colloïdale ont une granulométrie moyenne supérieure à 40nm et de préférence supérieure à 50nm et inférieure à 150nm et de préférence inférieure à 130nm.

9. Vitrage selon la revendication 7 dans lequel le matériau intumescent est un silicate de sodium, de potassium ou d'un mélange des deux, et de préférence le potassium est au moins à 80%.

10. Vitrage anti-feu selon l'une des revendications précédentes, dans lequel la couche intumescente contient aussi des polyols en proportion inférieure à 10% en poids, et de préférence inférieure à 8%.

11. Vitrage anti-feu selon l'une des revendications précédentes dans lequel le matériau de la couche intumescente comprend encore des composés photo-activateurs en quantité permettant d'accroître l'action de l'exposition aux UV.

12. Vitrage anti-feu selon la revendication 11 dans lequel les composés photo-activateurs font partie du groupe comprenant : le triméthoxy(2-5-7-oxabicyclo(4.1.0)hept-3-4L) éthylsilane, le tri(propylène glycol)diacrylate, le vinyltriéthoxylane.

13. Procédé de préparation de vitrage anti-feu selon l'une des revendications précédentes comprenant au moins une couche intumescente formée :
- soit à partir d'une solution d'hydroxyde alcalin à laquelle on ajoute une suspension aqueuse de silice colloïdale ;
- soit d'une solution de silicate alcalin à laquelle est ajoutée une quantité de suspension aqueuse de silice colloïdale ;
- soit par un ensemble comprenant pour partie une solution de silicate alcalin, pour partie une solution d'hydroxyde alcalin, auxquelles est ajoutée la suspension de silice colloïdale
la composition obtenue étant exposée au rayonnement UV après un temps de maturation qui n'est pas inférieur à 2 heures.

14. Procédé selon la revendication 13 dans lequel la composition de silicates alcalins hydratés dans laquelle tous les composants sont réunis, est appliquée sur une feuille de verre horizontale selon l'épaisseur souhaitée, la solution étant exposée aux UV jusqu'à gélification, une deuxième feuille de verre étant appliquée sur la couche intumescente, l'ensemble étant assemblé par calandrage et/ou passage à l'étuve.

15. Procédé selon la revendication 14 dans lequel la composition appliquée sur la feuille de verre est contenue par un cordon étanche à cette composition, situé à la périphérie de la feuille pendant son durcissement.

16. Procédé selon la revendication 15 dans lequel le cordon étanche est formé par durcissement accéléré local de la composition elle-même notamment par élévation de la température.

17. Procédé selon la revendication 13 dans lequel la composition de silicates alcalins hydratés est versée dans l'espace ménagé entre deux feuilles de verre à la périphérie desquelles est disposé un cordon étanche, la composition étant exposée aux UV au travers des feuilles de verre.

18. Procédé selon l'une des revendications 13 à 17 dans lequel la prise en masse de la solution intumescente est accélérée par chauffage à une température n'excédant pas 95°C.

19. Procédé selon l'une des revendications 13 à 18 dans lequel l'exposition du matériau intumescent est d'au moins 50w/m², (puissance des UV seuls) de composition et de préférence supérieur à 200w/m².

20. Procédé selon l'une des revendications 13 à 19 dans lequel l'exposition de la composition est poursuivie jusqu'à obtention d'une résistance à l'écrasement d'au moins 5kg/cm² et de préférence d'au moins 10kg/cm²_{.}
